# FASCICULE DE BREVET EUROPEEN

(11) **EP 2 907 315 B1**
(45) Date de publication et mention de la délivrance du brevet: **22.06.2022**
(21) Numéro de dépôt: 13786685.1
(22) Date de dépôt: 07.10.2013
(51) Int. Cl.: H04L 65/612

(54) **HERITAGE DE PARAMETRES D'IDENTIFIANT UNIVERSEL DE RESSOURCE (URI)**
VERERBUNG VON UNIFORMEN RESSOURCENIDENTIFIKATOR (URI)-PARAMETERN
INHERITANCE OF UNIFORM RESOURCE IDENTIFIER (URI) PARAMETERS

(30) Priorité: 09.10.2012 FR 1259623
(43) Date de publication de la demande: 19.08.2015
(73) Titulaire: ORANGE, 92130 Issy-les-Moulineaux (FR)
(72) Inventeur: KERVADEC, Sylvain, 35490 Sens de Bretagne (FR); BECKER, Claudia, 35000 Rennes (FR); VIVOLO, Olivier, 35000 Rennes (FR)
(86) Numéro de dépôt international: PCT/FR2013/052379
(87) Numéro de publication internationale: WO 2014/057197

(56) Documents cités:
- WO-A1-2004/051453
- WO-A2-2011/038032
- US-A1- 2012 030 224
- ANONYMOUS: "Text of ISO/IEC IS 23009-1 Media Presentation Description and Segment Formats", 98. MPEG MEETING; 28-11-2011 - 2-12-2012; GENEVA; (MOTION PICTURE EXPERT GROUP OR ISO/IEC JTC1/SC29/WG11),, no. N12329, 6 janvier 2012 (2012-01-06), XP030018824,

## Description

### Domaine technique

L'invention se rapporte aux communications de contenus multimédia.

On entend par contenu multimédia tout contenu audio ou vidéo, ou plus généralement tout autre contenu numérique.

Elle concerne plus spécifiquement la transmission et la réception de contenus multimédia sur un réseau, en particulier le téléchargement continu, aussi appelé *streaming,* de contenus multimédia sur un réseau.

Elle concerne plus précisément une communication utilisant des adresses universelles de contenus.

Elle s'applique notamment à tout terminal client (dans la suite appelé simplement terminal) capable de communiquer sur un réseau de télécommunications pour accéder à un contenu multimédia via une adresse universelle, aussi appelée URI (de l'anglais *Uniform Ressource identifier*).

### Etat de la technique

Pour accéder à un contenu multimédia, un terminal client a généralement recours à une adresse universelle, ou URI. Une telle adresse fournit à la fois un accès au contenu et des indications sur le protocole associé pour le consommer (par consommer, on entend par exemple le visualiser, dans le cas d'un contenu vidéo). Une URI est une chaîne de caractères identifiant une ressource physique ou abstraite, et dont la syntaxe respecte un ensemble de normes édictées par l'IETF (*Internet Engineering Task Force*), et notamment la spécification RFC 3986 (spécification : *Uniform Resource Identifier (URI): Generic Syntax*). Une telle adresse universelle prendra par exemple la forme dvb://contenu1, rtsp://contenu2, HTTP://contenu3, ftp://contenu4, etc.

L'accès au contenu multimédia peut être direct (déclenché par une seule requête, au travers d'une unique URI), ou indirect, l'URI fournissant dans ce cas les paramètres permettant d'accéder au service au travers d'une seconde requête. Une illustration classique en est un service de vidéo à la demande : une première étape consiste pour le terminal à télécharger un document décrivant les paramètres d'accès au service (SDP pour *Session Description Protocol*) via le protocole HTTP (de l'anglais *Hyper Text Transport Protocol*), un protocole de communication client-serveur développé pour les réseaux Internet et en particulier le Web ; lors d'une seconde étape, le service démarre effectivement, c'est-à-dire que le terminal client peut recevoir et afficher la vidéo, grâce aux informations fournies dans le document (dans cet exemple, le SDP). On notera que ce document peut être un fichier informatique ou un ensemble d'informations descriptives du contenu accessible à une certaine adresse. Dans la suite, on se réfèrera selon le contexte à l'expression « fichier de description » ou « document ». On notera que ce type d'accès au service peut nécessiter la présence d'un serveur (notamment dans le cas d'une communication point à point ou « unicast ») ou non (dans le cas d'une communication point vers multipoint de type « broadcast » ou « multicast »). Notamment, le protocole HTTP est de type point à point (« unicast »), et implique de ce fait la présence d'un serveur afin de traiter la requête d'un client dit client HTTP.

Il est fréquent, dans ce contexte du protocole HTTP, de recourir, pour échanger les données entre le client et le serveur, à une technique de type « adaptive streaming ». Ce type de technique permet notamment d'offrir une bonne expérience utilisateur tout en tenant compte par exemple des variations de bande passante sur la liaison entre le terminal client et le serveur de contenu. Classiquement, différentes qualités peuvent être encodées pour la même vidéo, correspondant par exemple à différents débits. Chaque débit est lui-même découpé en segments temporels (ou « fragments » de contenu). La description de ces différents débits et de la segmentation, ainsi que les fragments de contenu, sont mis à disposition du terminal client sur une plateforme de service. Pour pouvoir accéder au contenu complet, il est donc nécessaire de connaître de nombreuses adresses (URI) correspondant à de multiples segments.

Il existe plusieurs solutions pour faciliter la distribution d'un tel contenu en streaming, comme par exemple les solutions propriétaires Microsoft *Smooth Streaming*, Apple *HLS*, Adobe *Http Dynamic Streaming* ou encore la norme MPEG DASH qui sera décrite ci-après. Ces méthodes proposent d'adresser au client un ou plusieurs fichiers de description intermédiaires, appelés aussi documents, ou manifestes, ou encore ressources, contenant les adresses des différents segments aux différentes qualités du contenu multimédia.

Par exemple MPEG DASH (pour *Dynamic Adaptive Streaming over http* - norme ISO/IEC 23009-1:2012(E)) est une norme de l'organisme de normalisation ISO/IEC dédiée au streaming de contenus multimédia sur Internet ; elle permet notamment à des périphériques connectés au réseau (TV, tablettes, etc.) de consommer des contenus multimédia via le protocole HTTP. La requête HTTP qu'un client conforme au standard MPEG DASH adresse au serveur contient une adresse universelle, ou URI, par exemple de type URL (de l'anglais *Uniform Resource Locator*), l'URL étant un cas particulier d'URI qui permet d'accéder au contenu multimédia sur un réseau Internet. Ainsi, dans le cas de MPEG DASH, l'accès au contenu se fait traditionnellement selon deux étapes :
1) Obtention d'un document de description, typiquement via le téléchargement d'un fichier contenant notamment les adresses des segments de média du contenu multimédia, ou MPD (pour *Media Présentation Description*). Ce téléchargement s'opère traditionnellement au travers d'une URL HTTP, mais peut également s'opérer au travers d'une adresse universelle (URI) décrivant un autre protocole (*ftp:*//*monfichierdedescription*, par exemple).
2) Obtention des segments de média, typiquement via un téléchargement, à l'aide des adresses contenues dans le document de description. Ce téléchargement s'opère traditionnellement au travers d'une URL HTTP, mais pourrait également s'opérer au travers d'une adresse universelle (URI) décrivant un autre protocole (*dvb.*//*monsegmentdecontenu* par exemple).

Dans certaines situations, les contenus peuvent être soumis à des contraintes particulières. Par exemple, l'accès au contenu peut être protégé, et cette protection suppose une identification du terminal qui varie naturellement en fonction de l'utilisateur, et un contrôle des droits de l'utilisateur qui peuvent de surcroît varier dans le temps. L'identification et le contrôle de droits sont traditionnellement effectués par une plateforme de service et le résultat est transmis au serveur de distribution par un ou plusieurs paramètres associés à l'adresse universelle URI, que l'on appellera dans la suite *paramètres d'URI.*

Afin d'associer ces paramètres spécifiques à une demande d'un terminal dans toutes les requêtes de contenu décrites dans le fichier de description, le système doit, dans un tel cas, générer autant de documents, ou fichiers de description que de demande de terminaux, ce qui est complexe et introduit de la charge sur la plate-forme de service ou sur le serveur de distribution.

La norme MPEG-DASH (« ISO/IEC IS 23009-1 ») enseigne en section 5.6-5.8 le paramétrage d'une adresse de segment en utilisant un paramètre (« byterange »), mais ce paramètre est inclus lui-même dans le fichier de description. Ce mécanisme optionnel ne permet donc pas de personnaliser une requête de contenu pour un terminal ou un parc de terminaux, en utilisant un seul fichier de description.

L'invention offre une solution ne présentant pas les inconvénients de l'état de la technique.

### L'invention

A cet effet, selon un aspect fonctionnel, l'invention a pour objet un procédé de génération d'un document décrivant un contenu multimédia contenant au moins un segment de données.

Un mode de réalisation est détaillé à l'appui de la revendication indépendante 1 et de ses dépendantes.

Il est ainsi possible, selon l'invention, de prévoir l'introduction d'un ou plusieurs paramètres personnalisés dans la seconde adresse, finale, du segment du contenu multimédia. L'adresse de segment générée est plus complète que la première adresse du segment ; elle peut notamment comporter des paramètres liés au client qui a demandé le contenu multimédia, au contraire de la première adresse selon l'état de l'art, qui ne peut être personnalisée que via la génération d'un document de description spécifique par client.

Les paramètres associés à l'adresse universelle du document de description (paramètres d'URI) sont typiquement des paramètres d'authentification qui sont naturellement propres à chaque client. Ainsi, l'invention offre-t-elle l'avantage de pouvoir à la fois gérer un seul document de description du contenu (manifeste, fichier de description, etc) pour l'ensemble des clients tout en personnalisant les adresses des segments de contenus par des paramètres associés très simplement à l'adresse du document de description.

Il est possible, selon un mode de mise en œuvre, de nommer explicitement les paramètres d'adresse universelle qui sont à prendre en compte lors de la génération de la seconde adresse, finale, du segment. Typiquement, il s'agira d'indiquer dans le document de description les paramètres d'URI qui sont à insérer, ou passer, dans l'adresse finale du segment, par exemple la signature, la date, etc. On peut ainsi choisir de privilégier certains paramètres d'URI, ou ne pas prendre en compte certains autres paramètres.

Un autre mode de mise en œuvre de l'invention permet une prise en compte automatique, implicite, des paramètres d'URI qui sont à prendre en compte pour la génération de l'adresse finale du segment. L'ordre indiqué dans la règle de génération peut être par exemple celui de l'importance des paramètres, du point de vue du serveur. Grâce à l'invention, il peut varier d'une machine à l'autre puisqu'il suffira dans ce cas de changer le contenu (la règle) du fichier de description.

Selon un autre aspect fonctionnel, l'invention a pour objet un procédé d'accès à un contenu multimédia contenant au moins un segment de données accessible via un document décrivant le contenu, ledit accès au segment se faisant via une deuxième adresse universelle du segment. Un mode de réalisation est détaillé à l'appui de la revendication indépendante 4 et de ses dépendantes.

Le client peut ainsi, connaissant d'une part le document de description et d'autre part les paramètres qui sont associés à l'adresse universelle du document de description, introduire selon la règle un ou plusieurs de ces paramètres dans l'adresse du segment du contenu multimédia qu'il souhaite consommer. La seconde adresse, ou adresse finale, de segment générée est donc plus complète que la première adresse, elle permet notamment de personnaliser l'accès aux segments du contenu par l'introduction de paramètres liés au client, typiquement des paramètres d'authentification qui lui sont naturellement propres. Ainsi, l'invention offre-t-elle l'avantage de proposer un seul document (manifeste, fichier de description, etc) à tous les clients, puisqu'il est possible de personnaliser les adresses des segments de contenus en fonction de paramètres passés simplement avec l'adresse du document.

Selon d'autres aspect matériels, l'invention concerne également un serveur de contenus multimédia apte à générer un document décrivant un contenu multimédia contenant au moins un segment de données ; un terminal apte à accéder à un contenu multimédia contenant au moins un segment de données accessible via un document décrivant le contenu ; un programme d'ordinateur comportant des instructions de code pour la mise en œuvre d'un procédé de génération d'un document décrivant un contenu multimédia ou pour la mise en œuvre d'un procédé d'accès à un contenu multimédia tel qu'exposé dans le jeu de revendications joint.

Les objets selon les aspects matériels de l'invention procurent au moins les mêmes avantages que ceux procurés par les procédés selon l'aspect fonctionnel.

L'invention sera mieux comprise à la lecture de la description qui suit, donnée à titre d'exemple et faite en référence aux dessins annexés.

### Les figures:

La figure 1 représente une architecture de streaming basée sur l'utilisation du protocole HTTP sur Internet selon l'état de l'art.
La figure 2 représente une architecture de streaming basée sur l'utilisation du protocole HTTP sur Internet selon un mode de réalisation de l'invention.
La figure 3 représente un chronogramme selon un mode de réalisation de l'invention.
La figure 4 représente une variante d'un mode de réalisation selon l'invention.

### Description détaillée d'un exemple de réalisation illustrant l'invention

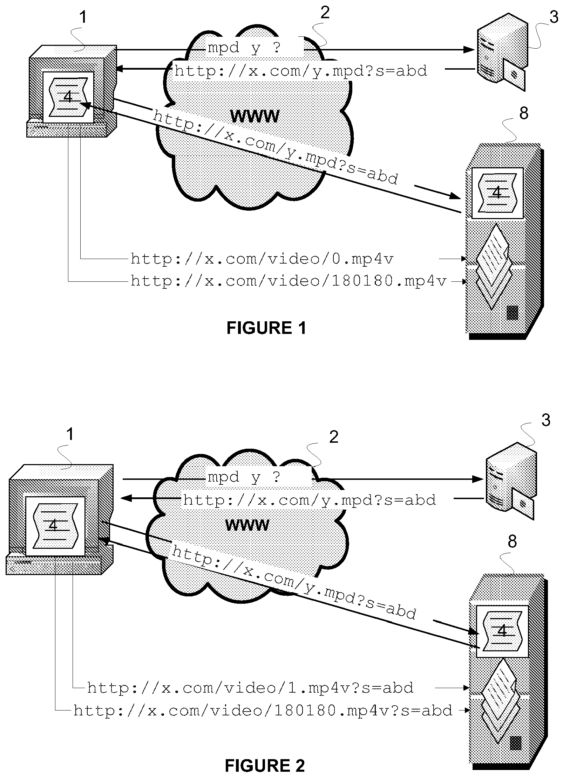

La figure 1 représente une architecture de *streaming* basée sur l'utilisation du protocole HTTP sur un réseau de type Internet selon l'état de la technique. Classiquement, un terminal client (1) souhaite entrer en communication avec un serveur de contenus (8) pour télécharger un contenu multimédia composé d'un ou plusieurs médias (audio, vidéo, etc.)

Dans la suite de l'exemple, comme exposé ci-dessus, on se positionne dans un contexte de streaming selon la norme MPEG DASH.

Le terminal (1) interroge tout d'abord une plateforme de service (3) pour obtenir l'adresse (ici, l'URL, mais de manière plus générale, une adresse universelle de type URI) du document de description du contenu multimédia (y) ; dans la suite, ce document est un fichier de type MPD (y.mpd).

La plateforme de service (3) répond en fournissant au terminal l'adresse du fichier MPD, dans l'exemple il s'agit de l'URL « HTTP://x.com/y.mpd » symbolisant un fichier y de type mpd qui peut être téléchargé (ou streamé) sur le site « x.com ».

La plateforme de service (3) peut ajouter à l'URI un certain nombre de paramètres à destination du client. Selon la spécification RFC 3986 de l'IETF, qui décrit la syntaxe générique des URI, ces paramètres sont introduits par le signe « ? ». Pour plus de précisions sur ce mécanisme d'insertion de paramètres dans une URI, l'homme du métier se reportera à la RFC 3986. Par exemple, dans le cadre d'une distribution de contenus avec authentification, la plateforme de service peut ajouter à l'URI un jeton d'authentification, ou « token » ; dans notre exemple ce jeton est représenté par la chaîne « s=abd », paramètre d'authentification du client pour la plateforme de livraison des contenus ; en réponse à sa requête de fichier de description, le client reçoit donc une url « HTTP://x.com/y.mpd?s=abd » comportant :
- l'adresse universelle du fichier elle-même (HTTP://x.com/y.mpd) ;
- un paramètre d'authentification (abd).

A partir de cette URI, le document de description (4) peut être téléchargé sur le serveur de contenus (8), le paramètre abd permettant au serveur d'authentifier le client.

Un exemple de fichier MPD conforme à la norme MPEG/DASH est présenté ci-dessous. Les champs pertinents dans le contexte de l'invention, qui permettent notamment de générer la première adresse universelle, sont présentés en italique.

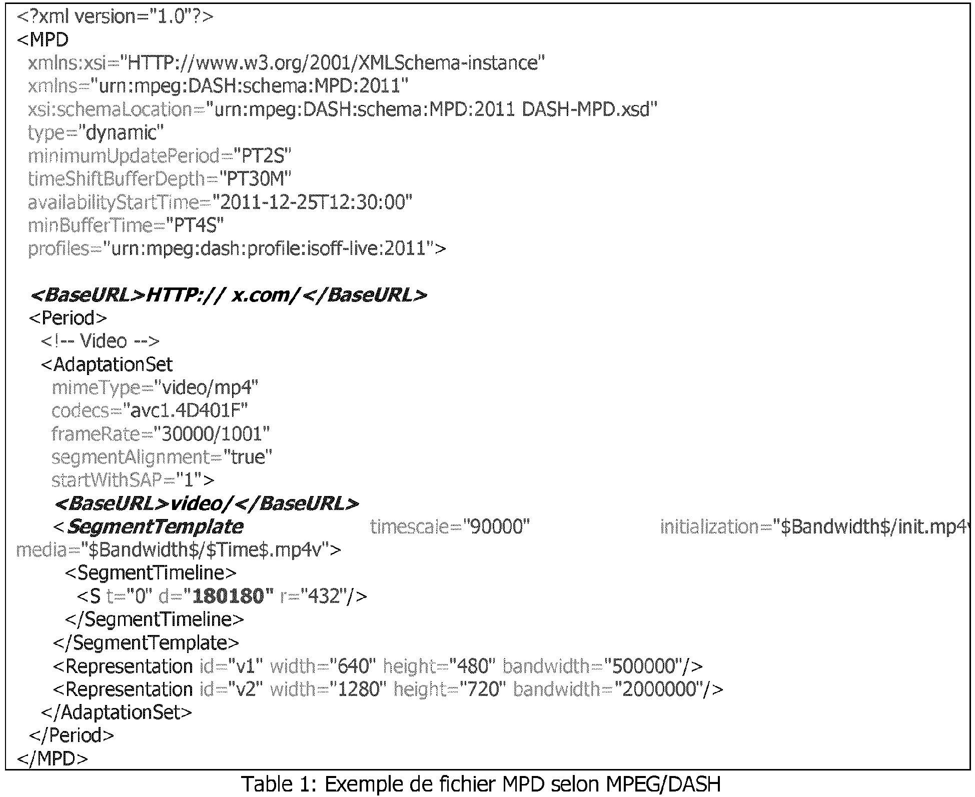

Le fichier MPD permet de générer des adresses de segments de média, que l'on appelle ici premières adresses universelles pour les distinguer des adresses qui seront générées dans le cadre de l'invention, que l'on appelle secondes adresses universelles ; les premières adresses, conformes à l'état de l'art de la norme MPEG/DASH, peuvent être générées :
- directement (l'URL du segment est précisée directement dans le fichier) ;
- ou indirectement, via un processus de construction des URL des segments de média.

Cette construction met en œuvre un mécanisme préalable de résolution d'adresses universelles (URI) décrit dans la RFC 3986 mentionnée ci-dessus. Le terminal client doit interpréter certains champs et les modifier de manière appropriée pour construire la première adresse universelle (URL ou URI) du segment de média.

Cette résolution d'URI est faite selon l'élément *BaseURL,* qui peut être présent à différents niveaux de la hiérarchie du MPD.

Dans cet exemple, les URL sont construites à l'aide des deux champs « BaseUrl » (« HTTP:// x.com/ » et « video/ ») et « SegmentTemplate ».

Le « SegmentTemplate » précisé par la norme MPEG/Dash est un procédé générique de construction des adresses (URI) intermédiaires à partir de différents identifiants, dans notre exemple :
- $Time$ : à remplacer par le temps de début du segment de média. Ce temps est fourni par la « SegmentTimeline » qui indique ici un offset de 180180 pour chaque début de nouveau segment ;
- $Number$ : à remplacer par le numéro d'ordre du segment de média désiré ;
- $Bandwidth$ : à remplacer par la valeur de l'attribut « bandwidth » (bande passante) de la représentation ciblée.

Ainsi, les deux premières URLs d'accès aux deux premiers segments vidéo pour une qualité (ou débit) de 500 kbps sont ici :
1. HTTP:// x.com/video/500000/0.mp4v, et
2. HTTP:// x.com/video/500000/180180.mp4v

Actuellement, MPEG DASH propose donc un mécanisme qui permet la génération de premières adresses (URL ou URI) de segments de média comportant un certain nombre de paramètres. Ce mécanisme est suffisant tant que les paramètres d'URL sont communs à tous les clients susceptibles d'accéder au contenu. En revanche, si l'on souhaite personnaliser ces paramètres en fonction du client (classiquement, pour de l'authentification et du contrôle d'accès ou de droits), la seule solution est la génération d'un fichier de description MPD spécifique pour chaque client. C'est un procédé coûteux (en temps et en ressource sur les plateformes de livraison du contenu) puisqu'il nécessite une construction à la volée d'un document de description pour chaque client.

C'est pourquoi l'invention propose de générer automatiquement des adresses (URI) de segments, nommées ici secondes adresses universelles pour les distinguer des premières adresses universelles, qui peuvent comporter un certain nombre de paramètres relatifs par exemple au terminal client. Dans cet exemple, un paramètre de sécurité, précisé en tant que paramètres de l'URL du fichier MPD (s=abd) est introduit, ou passé, lors de la génération de la seconde adresse des segments. Ces secondes adresses comportent donc, en plus des premières adresses qui peuvent être générées selon l'état de l'art, ce paramètre de sécurité personnalisé. En d'autres termes, les secondes adresses de segment sont adaptées à chaque terminal client, bien qu'elles aient été générées à partir d'un unique fichier de description MPD.

Naturellement, il est déjà connu de faire passer un paramètre d'URL (comme le « token » mentionné ci-dessus) lors d'une demande de contenu, lorsqu'il y a un seul segment (par exemple audio) associé à la demande de contenu et donc pas d'indirection via un fichier de description. Mais quand le contenu n'est accessible qu'au travers du fichier de description, il n'existe pas de solution aujourd'hui pour procéder au passage du paramètre vers chacun des segments, sauf en générant un fichier spécifique par requête.

La figure 2 décrit le principe d'un système de streaming selon l'invention.

Les premières étapes de requête et réception de l'adresse universelle du fichier (y.mpd) de description auprès de la plateforme de service (3), requête et réception du fichier de description lui-même auprès de la plateforme de contenus (8), sont identiques à celles qui ont été décrites à l'appui de la figure 1.

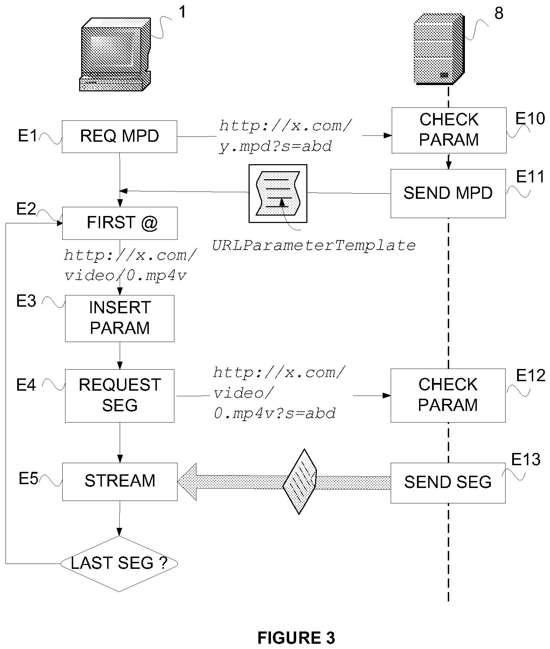

Cependant, lors d'une étape ultérieure, grâce à l'invention, le paramètre associé à l'adresse (URL) du fichier de description (ici le token « s=abd »qui a été préalablement transmis par la plateforme de service en tant que paramètre d'URI) est inséré par le client dans chaque requête de demande de segment de média selon un procédé qui va être décrit plus en détails à l'appui de la figure 3.

Ainsi, les deux premières URL d'accès aux deux premiers segments vidéo pour une qualité de 500 kbps deviennent ici :
1. HTTP:// x.com/video/500000/0.mp4v?s=abd, et
2. HTTP:// x.com/video/500000/180180.mp4v?s=abd

Il apparaît donc clairement deux avantages de l'invention par rapport à l'état de l'art décrit à la figure 1 :
- Il est possible, grâce à cette nouvelle méthode, d'effectuer une vérification par le serveur du *token* présent dans l'URL de chaque segment de média. Si le *token* de chaque segment de média est valide, le serveur délivre effectivement le segment de média. Sinon, le téléchargement échoue. Le mécanisme est ainsi plus sécurisé qu'auparavant.
- De plus, il n'est plus nécessaire de générer un fichier de description (y.mpd) pour chaque client, puisque celui-ci peut personnaliser son accès aux différents segments du contenu en passant les paramètres qu'il a reçus préalablement dans l'URL du fichier de description.

La figure 3 décrit sous forme de chronogramme les différentes étapes de ce mécanisme selon l'invention.

Elle se base sur l'échange et l'exploitation d'un fichier y.MPD tel que modifié ci-dessous (les champs en italique sont de nouveaux champs selon l'invention).

Le nouveau champ *URLParameters* précise pour sa part que le mécanisme d'héritage de l'invention est actif. Naturellement, d'autres variantes sont possibles. Notamment, on peut considérer que ce champ est optionnel, sa présence ou son absence étant testée par le module d'analyse du fichier XML présent sur le terminal client. S'il est absent, un paramètre par défaut peut lui être associé.

Le nouveau champ *URLParameterTemplate* permet de passer des paramètres aux adresses (URL, URI) de segments de média qui vont être générées. Le champ *URLParameterTemplate* précise notamment quels champs du fichier sont à réutiliser dans chaque segment de média. Dans cet exemple, seul le champ « token » est à réutiliser mais naturellement un nombre supérieur de paramètres est envisageable. On peut considérer que ce champ est optionnel, sa présence ou son absence étant testée par le module d'analyse du fichier XML présent sur le terminal client. S'il est absent, un paramètre par défaut peut également lui être associé.

Lors d'une étape E1, le terminal 1 requiert le fichier de description y.mpd qui lui est transmis par le serveur de contenus (8) au cours d'une étape E10.

Lors d'une étape E2, il génère une première adresse universelle (HTTP://x.com/video/0.mp4v) d'un segment de contenu.

Lors d'une étape E3, il génère une seconde adresse universelle du segment (http://x.com/video/0.mp4v?s=abd) par insertion du paramètre d'authentification « s=abd » qui lui a été transmis en tant que paramètre de l'adresse du fichier de description, dans la seconde adresse du segment, conformément à la règle (*URLParameterTemplate*) lue dans le fichier de description.

Lors d'une étape E4, il utilise cette seconde adresse universelle pour demander le segment, qui lui est transmis par le serveur de contenus lors d'une étape E12 après que le serveur a vérifié les paramètres d'authentification (s=abd). Il peut alors consommer le contenu au cours d'une étape E5 facultative.

Le test de l'étape E6 lui permet de répéter les étapes E3 à E5 pour un autre segment de contenu tant qu'il en reste à traiter.

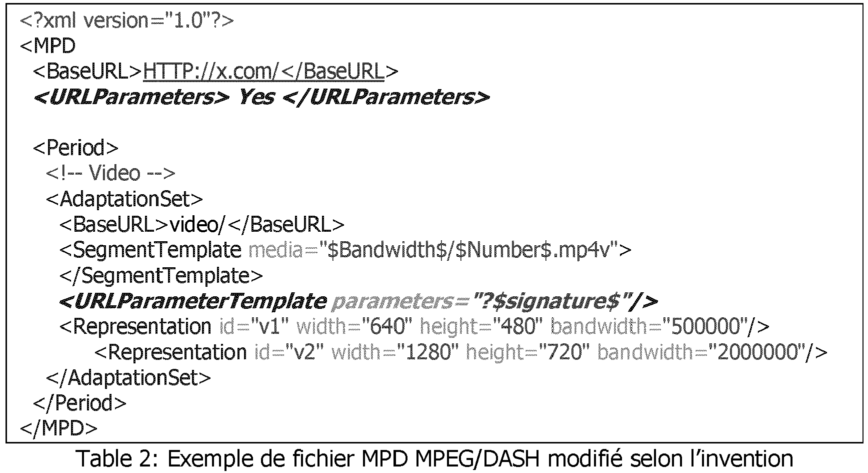

Dans ce premier exemple, les paramètres qui doivent être passés pour générer la seconde adresse universelle du segment sont mentionnés explicitement dans la règle ; un exemple de syntaxe est donné dans le fichier pour le passage du paramètre « signature »: <URLParameterTemplate parameters="?$signature$"/>

Selon une variante, les paramètres qui doivent être passé pour générer la seconde adresse universelle sont mentionnés par leur ordre, selon par exemple la syntaxe suivante, qui signifie que l'on va passer d'abord le paramètre numéro 2, puis le 1, puis le 3 :
<URLParameterTemplate = "2 1 3"/>

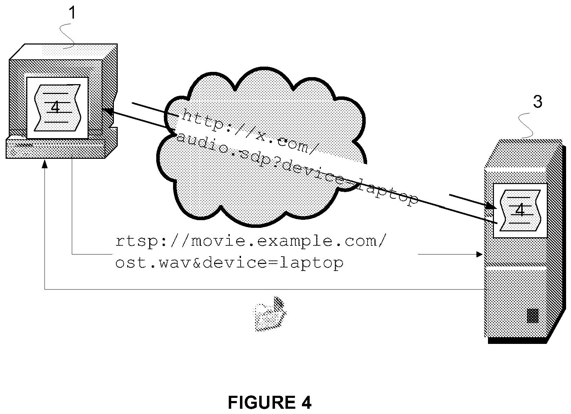

Selon une autre variante, représentée à l'appui de la figure 4, le contexte n'est plus celui de la distribution de contenus en streaming sur http, mais celui du streaming sur RTP (Real Time Protocol), avec un contrôle par le protocole RTSP (Real Time Streaming Protocol). Dans un service de vidéo à la demande (VOD) contrôlé par RTSP, l'établissement de la session de vidéo à la demande passe par une première étape de téléchargement des informations permettant de démarrer cette session. Cette première étape repose généralement sur le protocole SDP (RFC 4566 de l'IETF), qui permet notamment de décrire le protocole à utiliser pour la session de VOD, des caractéristiques du contenu (débit, codec vidéo et audio), etc., comme illustré dans la table ci-dessous. Ces informations peuvent être récupérées via le téléchargement préalable d'un fichier (appelé fichier « sdp »), et servent ensuite à l'établissement de la session de streaming entre le terminal client et le serveur.

**Table 3 : Exemple de fichier SDP**

| |
|---|
| File:audio.sdp |
| a=control:rtsp://movie.example.com/ost.wav |
| m=audio 0 RTP/AVP 96 |
| a=rtpmap:96 L8/22048/1 |
| a=range:npt=0-262.243000 |

Comme représenté à la figure 4, l'invention peut s'appliquer directement à ce contexte applicatif.

On suppose que le terminal 1 a obtenu le fichier de description SDP.

Les paramètres utilisés lors de la requête de téléchargement du fichier SDP sont alors exploités pour construire la requête permettant l'établissement de la session. Notamment, un paramètre « device = laptop » est attaché à l'adresse universelle du fichier SDP et passé pour la récupération du segment audio selon le protocole rtsp. La requête de segment de média prend la forme :
rtsp://movie.example.com/ost.wav&device=laptop

De la même manière que dans l'exemple de la table 2, il convient d'insérer une nouvelle signalisation dans ce fichier sdp permettant d'activer l'invention.

Il va de soi que le mode de réalisation qui a été décrit ci-dessus a été donné à titre purement indicatif et nullement limitatif, et que de nombreuses modifications peuvent y être facilement apportées par l'homme de l'art sans pour autant sortir du cadre de l'invention.

## Revendications

1. Procédé de génération d'un document accessible sur un réseau de communications via une adresse universelle du document, le document décrivant un contenu multimédia contenant au moins un segment de données et comprenant des données pour générer une première adresse universelle dudit segment, ledit procédé de génération de document comporte au moins une étape d'écriture dans le document d'au moins une règle de génération d'une deuxième adresse universelle pour accéder au segment,
ladite règle de génération indiquant la prise en compte, pour générer ladite deuxième adresse universelle du segment pour un terminal client :
- de la première adresse universelle,
- et d'au moins un paramètre personnalisé pour ledit terminal client, inclus dans l'adresse universelle du document décrivant le contenu.

2. Procédé de génération d'un document de description selon la revendication 1, **caractérisé en ce que** la règle de génération d'une deuxième adresse universelle nomme ledit au moins un paramètre obtenu qui doit être pris en compte pour générer la deuxième adresse universelle du segment.

3. Procédé de génération d'un document de description selon la revendication 1, **caractérisé en ce que** la règle de génération d'une deuxième adresse universelle indique l'ordre pour la prise en compte dudit au moins un paramètre obtenu qui doit être pris en compte pour générer la deuxième adresse universelle du segment.

4. Procédé d'accès à un contenu multimédia contenant au moins un segment de données accessible via un document décrivant le contenu, ledit document étant accessible sur un réseau de communications via une adresse universelle du document et comprenant des données pour générer une première adresse universelle dudit segment, ledit accès au segment se faisant via une deuxième adresse universelle du segment, ledit procédé d'accès comporte les étapes suivantes sur un terminal client :
- réception de l'adresse universelle du document décrivant le contenu, ladite adresse incluant au moins un paramètre personnalisé pour ledit terminal client ;
- obtention (E1, E11) du document décrivant le contenu à partir de son adresse ;
- génération de la première adresse universelle du segment ;
- lecture d'au moins une règle de génération d'une deuxième adresse universelle dans le document décrivant le contenu;
- En fonction de la règle de génération, de la première adresse universelle du segment et du paramètre personnalisé obtenu, génération (E3) de la deuxième adresse universelle du segment.

5. Serveur de contenus multimédia apte à générer un document (y.mpd) accessible sur un réseau de communications via une adresse universelle du document, le document décrivant un contenu multimédia (y) contenant au moins un segment de données et comprenant des données pour générer une première adresse universelle dudit segment, ledit serveur de contenus comportant un module d'écriture dans le document d'au moins une règle de génération d'une deuxième adresse universelle pour accéder au segment, ladite règle de génération indiquant la prise en compte, pour générer ladite deuxième adresse du segment pour un terminal client :
- de la première adresse universelle,
- et d'au moins un paramètre personnalisé pour ledit terminal client, inclus dans l'adresse universelle du document décrivant le contenu.

6. Terminal apte à accéder à un contenu multimédia contenant au moins un segment de données accessible via un document décrivant le contenu, ledit document étant accessible sur un réseau de communications via une adresse universelle du document et comprenant des données pour générer une première adresse universelle dudit segment, ledit accès au segment se faisant via une deuxième adresse universelle du segment, ledit terminal comporte :
- un module de réception de l'adresse universelle du document, ladite adresse incluant au moins un paramètre personnalisé pour ledit terminal client ;
- un module d'obtention du document décrivant le contenu à partir de son adresse ;
- un module de génération de la première adresse universelle du segment ;
- un module de lecture d'au moins une règle de génération d'une deuxième adresse universelle dans le document décrivant le contenu ;
- un module de génération de la deuxième adresse universelle du segment en fonction de la règle de génération, de la première adresse universelle du segment et du paramètre personnalisé obtenu.

7. Programme d'ordinateur comportant des instructions de code pour la mise en œuvre d'un procédé de génération d'un document décrivant un contenu multimédia conforme à la revendication 1, lorsque celle-ci est exécutée par un processeur.

8. Programme d'ordinateur comportant des instructions de code pour la mise en œuvre d'un procédé d'accès à un contenu multimédia conforme à la revendication 4, lorsque celle-ci est exécutée par un processeur.

## Patentansprüche

1. Verfahren zur Generierung eines über ein Kommunikationsnetz mittels einer Universaladresse des Dokuments zugänglichen Dokuments, wobei das Dokument einen mindestens ein Datensegment enthaltenden Multimedia-Inhalt beschreibt und Daten umfasst, um eine erste Universaladresse des Segments zu generieren, wobei das Verfahren zur Generierung eines Dokuments mindestens einen Schritt des Schreibens mindestens einer Generierungsregel einer zweiten Universaladresse in das Dokument aufweist, um auf das Segment zuzugreifen,
wobei die Generierungsregel zur Generierung der zweiten Universaladresse des Segments für ein Client-Endgerät die Berücksichtigung anzeigt:
- der ersten Universaladresse,
- und mindestens eines benutzerdefinierten Parameters für das Client-Endgerät, der in der Universaladresse des den Inhalt beschreibenden Dokuments enthalten ist.

2. Verfahren zur Generierung eines Beschreibungsdokuments nach Anspruch 1, **dadurch gekennzeichnet, dass** die Generierungsregel einer zweiten Universaladresse den mindestens einen erhaltenen Parameter benennt, der zur Generierung der zweiten Universaladresse des Segments berücksichtigt werden muss.

3. Verfahren zur Generierung eines Beschreibungsdokuments nach Anspruch 1, **dadurch gekennzeichnet, dass** die Generierungsregel einer zweiten Universaladresse den Befehl für die Berücksichtigung des mindestens einen erhaltenen Parameters anzeigt, der zur Generierung der zweiten Universaladresse des Segments berücksichtigt werden muss.

4. Zugangsverfahren zu einem Multimedia-Inhalt, der mindestens ein über ein den Inhalt beschreibendes Dokument zugängliches Datensegment enthält, wobei das Dokument über ein Kommunikationsnetz mittels einer Universaladresse des Dokuments zugänglich ist und Daten umfasst, um eine erste Universaladresse des Segments zu generieren, wobei der Zugang zum Segment mittels einer zweiten Universaladresse des Segments erfolgt, wobei das Zugangsverfahren die folgenden Schritte auf einem Client-Endgerät aufweist:
- Empfang der Universaladresse des den Inhalt beschreibenden Dokuments, wobei die Adresse mindestens einen benutzerdefinierten Parameter für das Client-Endgerät enthält;
- Erhalt (E1, E11) des den Inhalt beschreibenden Dokuments ausgehend von seiner Adresse;
- Generierung der ersten Universaladresse des Segments;
- Lesen mindestens einer Generierungsregel einer zweiten Universaladresse im den Inhalt beschreibenden Dokument;
- Generierung (E3) der zweiten Universaladresse des Segments abhängig von der Generierungsregel, von der ersten Universaladresse des Segments und vom erhaltenen benutzerdefinierten Parameter.

5. Multimedia-Inhaltsserver, der ein Dokument (y.mpd) generieren kann, das über ein Kommunikationsnetz mittels einer Universaladresse des Dokuments zugänglich ist, wobei das Dokument einen mindestens ein Datensegment enthaltenden Multimedia-Inhalt (y) beschreibt und Daten umfasst, um eine erste Universaladresse des Segments zu generieren, wobei der Inhaltsserver ein Modul zum Schreiben in das Dokument mindestens einer Generierungsregel einer zweiten Universaladresse für den Zugang zum Segment aufweist, wobei die Generierungsregel zur Generierung der zweiten Adresse des Segments für ein Client-Endgerät die Berücksichtigung anzeigt:
- der ersten Universaladresse,
- und mindestens eines benutzerdefinierten Parameters für das Client-Endgerät, der in der Universaladresse des den Inhalt beschreibenden Dokuments enthalten ist.

6. Endgerät, das fähig ist, auf einen Multimedia-Inhalt zuzugreifen, der mindestens ein mittels eines den Inhalt beschreibenden Dokuments zugängliches Datensegment enthält, wobei das Dokument über ein Kommunikationsnetz mittels einer Universaladresse des Dokuments zugänglich ist und Daten enthält, um eine erste Universaladresse des Segments zu generieren, wobei der Zugang zum Segment mittels einer zweiten Universaladresse des Segments erfolgt, wobei das Endgerät aufweist:
- ein Empfangsmodul der Universaladresse des Dokuments, wobei die Adresse mindestens einen benutzerdefinierten Parameter für das Client-Endgerät enthält;
- ein Erhaltsmodul des den Inhalt beschreibenden Dokuments ausgehend von seiner Adresse;
- ein Generierungsmodul der ersten Universaladresse des Segments;
- ein Lesemodul mindestens einer Generierungsregel einer zweiten Universaladresse im den Inhalt beschreibenden Dokument;
- ein Generierungsmodul der zweiten Universaladresse des Segments abhängig von der Generierungsregel, von der ersten Universaladresse des Segments und vom erhaltenen benutzerdefinierten Parameter.

7. Computerprogramm, das Codeanweisungen zur Durchführung eines Generierungsverfahrens eines einen Multimedia-Inhalt beschreibenden Dokuments nach Anspruch 1 aufweist, wenn dieses von einem Prozessor ausgeführt wird.

8. Computerprogramm, das Codeanweisungen zur Durchführung eines Zugangsverfahrens zu einem Multimedia-Inhalt gemäß Anspruch 4 aufweist, wenn dieses von einem Prozessor ausgeführt wird.

## Claims

1. Method for generating a document accessible over a communication network via a universal address for the document, the document describing a multimedia content containing at least one data segment and comprising data for generating a first universal address for said segment, said method for generating a document comprising at least one step of writing in the document at least one generation rule for generating a second universal address for accessing the segment, said generation rule indicating the accounting for, to generate said second universal address for the segment for a client terminal:
- the first universal address,
- and at least one parameter personalized for said client terminal, included in the universal address for the document describing the content.

2. Method for generating a description document according to Claim 1, **characterized in that** the rule for generating a second universal address names said at least one obtained parameter that has to be accounted for to generate the second universal address for the segment.

3. Method for generating a description document according to Claim 1, **characterized in that** the rule for generating a second universal address indicates the order for accounting for said at least one obtained parameter that has to be accounted for to generate the second universal address for the segment.

4. Method for accessing a multimedia content containing at least one data segment accessible via a document describing the content, said document being accessible over a communication network via a universal address for the document and comprising data for generating a first universal address for said segment, said access to the segment taking place via a second universal address for the segment, said access method comprising the following steps on a client terminal:
- receiving the universal address for the document describing the content, said address including at least one parameter personalized for said client terminal;
- obtaining (E1, E11) the document describing the content from its address;
- generating the first universal address for the segment;
- reading at least one rule for generating a second universal address in the document describing the content;
- according to the generation rule, the first universal address for the segment and the obtained personalized parameter, generating (E3) the second universal address for the segment.

5. Multimedia content server capable of generating a document (y.mpd) accessible over a communication network via a universal address for the document, the document describing a multimedia content (y) containing at least one data segment and comprising data for generating a first universal address for said segment, said content server comprising a module for writing in the document at least one generation rule for generating a second universal address for accessing the segment, said generation rule indicating the accounting for, to generate said second universal address for the segment for a client terminal:
- the first universal address,
- and at least one parameter personalized for said client terminal, included in the universal address for the document describing the content.

6. Terminal capable of accessing a multimedia content containing at least one data segment accessible via a document describing the content, said document being accessible over a communication network via a universal address for the document and comprising data for generating a first universal address for said segment, said access to the segment taking place via a second universal address for the segment, said terminal comprising:
- a module for receiving the universal address for the document, said address including at least one parameter personalized for said client terminal;
- a module for obtaining the document describing the content from its address;
- a module for generating the first universal address for the segment;
- a module for reading at least one rule for generating a second universal address in the document describing the content;
- a module for generating the second universal address for the segment according to the generation rule, the first universal address for the segment and the obtained personalized parameter.

7. Computer program comprising code instructions for implementing a method for generating a document describing a multimedia content in accordance with Claim 1, when the latter is executed by a processor.

8. Computer program comprising code instructions for implementing a method for accessing a multimedia content in accordance with Claim 4, when the latter is executed by a processor.
